# EUROPEAN PATENT SPECIFICATION

(11) **EP 2 784 853 B1**
(45) Date of publication and mention of the grant of the patent: **25.07.2018**
(21) Application number: 13401030.5
(22) Date of filing: 27.03.2013
(51) Int. Cl.: H01M 10/052, B82Y 30/00, C01G 49/00, H01M 4/485, C01G 45/12, H01M 4/505, H01M 4/525

(54) **Lithium transistion metal titanate with a spinel structure, method for its manufacturing, its use, Li-ion cell and battery**
Übergangsmetall-Lithiumtitanat mit einer Spinell-Struktur, Herstellungsmethode, Verwendung und Lithium-Ionen-Batterie.
Titanate lithium-métal de transition avec une structure spinelle, son procédé de fabrication, son utilisation, cellule et batterie Li-ion

(43) Date of publication of application: 01.10.2014
(73) Proprietor: Karlsruher Institut für Technologie, 76131 Karlsruhe (DE)
(72) Inventor: Chen, Ruiyong, 76187 Karlsruhe (DE); Indris, Sylvio, 76344 Eggenstein-Leopoldshafen (DE)

(56) References cited:
- WO-A1-2011/092277
- ALOIS KUHN ET AL: "On the Synthesis of Ramsdellite LiTiMO4 (M = Ti, V, Cr, Mn, Fe): An Experimental and Computational Study of the Spinel-Ramsdellite Transformation", EUROPEAN JOURNAL OF INORGANIC CHEMISTRY, vol. 2007, no. 21, 1 July 2007 (2007-07-01), pages 3375-3384, XP055067194, ISSN: 1434-1948, DOI: 10.1002/ejic.200600993

## Description

The present invention relates to a lithium transition metal titanate with a spinel structure, a method for its manufacturing, its use as a cathode material, a lithium-ion cell and a lithium-ion battery.

### State of the art

### Technical domain

The present invention focuses on the area of energy storage and is related to a certain class of cathode materials, which are used as intercalation materials in lithium-ion cells, main components of lithium-ion batteries. A lithium-ion battery comprises one or more cells, in which lithium ions acts as ionic charge carriers. The typical requirements made on energy storage devices in terms of energy and power density, security, life time, environmental impact and costs apply also for cells and for each of their components and thus specifically for the cathode material.

### Description

The increase in energy consumption worldwide, the shortage in primary energy sources and the increased level of CO₂ emission by the use of fossil fuels have become a major issue we are facing nowadays. On this issue, electrochemical energy storage using rechargeable Li-ion batteries is one of the most competitive technologies for future stationary and automotive applications.

The overall electrochemical performance of Li-ion batteries such as the operating voltage, energy density and life time is governed by the intrinsic properties of the electrode materials. Cathode materials are the key components determining the performance of Li-ion batteries. High energy and power density of cathode materials are critical to meet the needs for future large-scale automotive applications. High energy density could be obtained by finding new cathode materials with higher specific capacities and higher discharge voltages. Cathode materials enabling more than one-electron reaction per formula unit are particularly attractive for higher capacity.

Although conversion materials have achieved great progress on this issue, problems of large volume expansion and poor cycling performance remain to be solved. [P. Poizot, S. Laruelle, S. Grugeon, L. Dupont, J.M. Tarascon, Nature, 407 (2000) 496; F. Badway, F. Cosandey, N. Pereira, G.G. Amatucci, J. Electrochem. Soc., 150 (2003) A1318.] Besides, conversion electrodes tend to work at low voltages in comparison with intercalation-based electrodes. [F. Wang, R. Robert, N. A. Chernoca, et. al., J. Am. Chem. Soc., 133 (2011) 18828.] In contrast, insertion reactions proceed with a solid-solution mechanism using a rigid host framework for Li⁺ transport, which is beneficial for long-term cycling performance. A majority of the existing insertion cathodes deliver capacity based on a single electron or even less than one electron reaction with limited practical capacity.

LiCoO₂ cathode materials (α-NaFeO₂ structure, space group R-3m) developed in 1992 provide a specific capacity of about 130 mA.h.g⁻¹, in which up to 0.5 Li⁺ per formula unit can be reversibly extracted from or inserted into the layered host structure, respectively [J.N. Reimers, J.R. Dahn, J. Electrochem. Soc., 139 (1992) 2091.]. LiCoOz is currently widely used in portable electronic equipment. Due to limited cycle life at elevated temperature and safety issues, new alternative materials step into a role. Layered LiNi_{1/3}Mn_{1/3}Co_{1/3}O₂ cathode materials were subsequently developed with a specific capacity of about 150 mAhg⁻¹ and better capacity retention. [T. Ohzuku, Y. Makimura, Chemistry Letters, 30 (2001) 642.] The combination of the transition metals nickel, manganese and cobalt offers optimized activity, low cost and stability.

A new alternative material of polyanion-type LiFePO₄ (olivine structure) has emerged in 1997 with a practical specific capacity of up to 160 mAhg⁻¹ utilizing one-electron Fe²⁺/Fe³⁺ redox reaction. [A.K. Padhi, K.S. Nanjundaswamy, J.B. Goodenough, J. Electrochem. Soc., 144 (1997) 1188.] LiFePO₄ exhibits high structure stability even at high temperature. Furthermore, LiFePO₄ shows environmental advantages compared to LiCoO₂.

Spinel framework of the general formula AB₂O₄ has received particular attention as electrode materials for Li-ion batteries. The lithiation voltage of these spinel materials depend on the type of the B-site cations. [E. Ferg, R.J. Gummow, A. de Kock, M.M. Thackeray, J. Electrochem. Soc., 141 (1994) L147.] B₂O₄ array may provide a strongly bonded framework for Li⁺ transport. Unoccupied crystallographic sites in the spinel host materials could accommodate additional Li⁺ into the host and provide three dimensional pathways for fast Li⁺ diffusion and therefore enable effective Li⁺ storage. Spinel LiMn₂O₄ is a high-voltage (4.1 V) cathode material with a three dimensional network for lithium ion diffusion. However, LiMn₂O₄ exhibits poor cycling performance [J.M. Tarascon, U.S. Patent 5 425 932, 1995; Q. Zhong, U.V. Sacken, Y. Gao, J.R. Dahn, U.S. Patent 5 700 597, 1997] and LiMn₂O₄ cathodes can be only cycled above 3 V utilizing a Mn³⁺/Mn⁴⁺ redox reaction to remain its spinel host framework, in other words, cycling is confined to one Li⁺ per formula unit, which restricts its capacity to about 120 mAhg⁻¹. Phase transition from cubic LiMn₂O₄ to tetragonal Li₂Mn₂O₄ may occur during further lithiation [M.M. Thackeray, W.I.F. David, P.G. Bruce, J.B. Goodenough, Mater. Res. Bull., 18 (1983) 461.], which leads to an evident loss of capacity. In addition, LiMn₂O₄ is instable at elevated temperature. The introduction of nickel into the framework may lower the Mn³⁺ concentration sufficiently to eliminate problems of Mn³⁺-site distortions. In spinel LiNi_{0.5}Mn_{1.5}O₄ the Mn³⁺/Mn⁴⁺ redox couple is inaccessible, whereas the Ni²⁺/Ni⁴⁺ couples are accessible with a discharge voltage about 4.7 V. The two-electron reaction utilizing Ni²⁺/Ni⁴⁺ redox reactions gives an overall one-electron capacity per formula unit of about 130 mAhg⁻¹. [Q. Zhong, A. Bonakdarpour, M. Zhang, Y. Gao, J.R. Dahn, J. Electrochem. Soc., 144 (1997) 205; J.B. Goodenough, K.S. Park, J. Am. Chem. Soc., 135 (2013) 1167.]

The above-mentioned cathode materials are based-on one-electron reaction per formula unit. To date, polyanion-type intercalation cathodes Li₂M²⁺SiO₄ (M = Fe, Mn) have attracted broad research activities, which are conceivable for a two-electron reaction utilizing M²⁺/M⁴⁺ redox couples with a theoretical capacity of 330 mAhg⁻¹ [M.S. Islam, R. Dominko, C. Masquelier, C. Sirisopanaporn, A.R. Armstrong, P.G. Bruce, J. Mater. Chem., 21 (2011) 9811.]. However, the Fe³⁺/Fe⁴⁺ oxidation in the Li₂FeSiO₄ occurs at a high voltage (∼4.8 V) in the vicinity of the stability limit of traditional liquid electrolytes. Li₂MnSiO₄ shows poor cyclability due to a Jahn-Teller distortion. In addition, attempts to remove more than one Li⁺ out of Li₂MSiO₄ host lead to structural collapse due to a phase transition and a large lattice volume change upon charging towards the fully delithiated state M⁴⁺SiO₄.[A. Kokalj, R. Dominko, G. Mali, A. Meden, M. Gaberscek, J. Jamnik, J. Mater. Chem., 19 (2007) 3633; R. Chen, R. Heinzmann, S. Mangold, V.S.K. Chakravadhanula, H. Hahn, S. Indris, J. Phys. Chem. C., 117 (2013) 884.] These facts restrict the success toward the 2 Li⁺ capacity. Thus, boosting the properties of known insertion materials or discovering new candidates remains a competitive strategy.

Energy-efficient production route of cathode materials for Li-ion batteries is another critical issue for large-scale applications. High crystallinity for material is necessary as a host framework. A solid-state reaction route is one of the most-widely used methods for the preparation of electrode materials, which is related to high energy consumption (> 800 °C).[U.S. Patent Application 2003/0064288 A1, 2003]. In their related work [J. Barker, M.Y. Saidi, J.L. Swoyer, Solid State Ionics 167 (2004) 413], the average size of particles obtained by this method is shown to be between 15 and 20 µm. Thus high temperature sintering results in the growth of these crystals to such a large size, which is unfavourable for battery materials due to the increased Li⁺ diffusion length through the bulk, reduced utility of the active materials and accordingly lower available capacity. In contrast, low-temperature solution route may contribute to significant energy saving.

Cathode materials are produced initially at the discharged state or lithiated state. The active components, i.e., the transition metals, are at their lower oxidation states. They are usually air-, and moisture-sensitive. Thus, the sintering procedure has to be carried out in an inert atmosphere to avoid the oxidation of active components. Flowing argon or mixture of argon/hydrogen gas is used to produce cathode materials.

### Problem

The main object of the present invention is therefore to provide a cathode material, which overcomes the limitations and drawbacks known from the state of the art.

In particular, it is an object of the present invention to provide a cathode material for a lithium-ion battery, which allows cycling with more than one Li⁺ per formula unit.

In particular, it is an object of the present invention to provide a cathode material for a lithium-ion battery with a high cycling stability, high-temperature stability and a high capacity.

A further object of the present invention is to provide a method for manufacturing such a cathode material, which is easy to be carried out and possible to be performed under air or in presence of oxygen and at low-temperature.

Furthermore, a use of this material is to be stated.

Eventually a lithium-ion cell and a lithium-ion battery, which comprise this doped spinel are to be indicated.

### Solution

The solution of this problem is provided by a cathode material according to claim 1, a method for its manufacturing according to claim 7, and a lithium-ion cell and a lithium-ion battery comprising a cathode material according to claims 9 and 10, respectively. The dependent claims describe preferred features.

### Specification of the present invention

The present invention relates to a spinel-structured intercalation cathode material of high capacity and high energy density for Li-ion batteries. The material corresponding to the invention is a doped spinel, more precisely a nanocrystalline lithium transition metal titanate with a spinel structure and a formula Li₁₊ₓM₁₊ₓTi₁₋ₓO₄ wherein 0 ≤ x ≤ 0,8 and M is at least one transition metal taken among the elements {Cr, Mn, Fe, Co, Ni, Cu, Zn, Mo, Nb and V} with a particle size between 1 nm and 500 nm.

In a preferred embodiment the at least one transition metal is taken among the elements {Mn, Fe, Co and Ni}.

In a preferred embodiment the nanocrystalline lithium transition metal titanate has a particle size between 2 nm and 200 nm, more preferred between 3 nm and 100 nm especially preferred between 4 nm and 30 nm. Larger particles (> 200 nm) cannot be fully lithiated at higher C-rate (10C) and the Li⁺ diffusion length is increased. This leads to a lower available capacity in the Li-ion battery.

In a preferred embodiment, the lithium transition metal titanate with spinel structure has the formula Li₁₊ₓM₁₊ₓTi₁₋ₓO₄ with 0 < x ≤ 0,8.

Stoechiometric LiMTiO₄ (M=Fe, Mn, Cr, V, etc...) adopts a spinel crystal structure with M³⁺ and Ti⁴⁺.

Non-stoichiometric Li_{1+*x*}M_{1+*x*}Ti_{1-*x*}O₄ with 0 < *x* ≤ 0.8 adopts a spinel crystal structure. This non-stoichiometric formula of Li₁₊ₓM³⁺₁₊ₓTi₁₋ₓO₄ acts as starting host before the subsequent M²⁺/M⁴⁺ redox reactions are utilized to obtain a high capacity and high energy density. The chosen range of values for x correspond to the new material structure, in which up to 1.8 Li⁺ per formula unit can be reversibly extracted from and inserted into the layered host structure without any structural collapse due to phase transition and lattice volume change during lithiation and delithiation processes. M³⁺ is the active component within the compounds during electrochemical charge/discharge cycling. Ti³⁺/Ti⁴⁺ redox couple is only slightly involved during cycling, indicated by a short plateau located between 1.5-2 V during charge/discharge. Li⁺ can be extracted or inserted into the spinel host accompanied by the oxidation of M³⁺/M⁴⁺ or the reduction M³⁺/M²⁺. Thus, using Li_{1+*x*}M_{1+*x*}Ti_{1-*x*}O₄ as starting host, the two-electron reaction utilizing M²⁺/M⁴⁺ can be achieved in the subsequent charge/discharge cycling with high specific capacity. Unlike the spinel LiMn₂O₄, the spinel Li_{1+*x*}Mn_{1+*x*}Ti_{1-*x*}O₄ exhibit stable cycling performance even subjected to deep lithiation and high-temperature test conditions.

The spinel materials according to the present invention deliver a higher specific capacity (up to 250 mAhg⁻¹) compared to the prior art. Mn-based spinel compounds have a higher Li⁺ insertion voltage (averaged discharge voltage is about 3.15 V) than that of Fe-based spinel compounds (averaged discharge voltage is about 2.5 V). In addition, Mn-based spinel compounds show clearly flat Mn²⁺/Mn³⁺ and Mn³⁺/Mn⁴⁺ redox plateau during the first few cycles. The plateau profiles transform into slope profiles after about 10 cycles for Li_{1.4}Mn_{1.4}Ti_{0.6}O₄ and Li_{1.8}Mn_{1.8}Ti_{0.2}O₄ compounds. The specific capacity is also slightly increased by using non-stoichiometric Li_{1+*x*}Mn_{1+*x*}Ti_{1-*x*}O₄ with the increase in the content of active component Mn³⁺. Surprisingly, the spinel Li_{1+*x*}Mn_{1+*x*}Ti_{1-*x*}O₄ compound exhibit significant high capacity even without any native carbon coatings. This material with bare surface can resist the LiPF₆ electrolyte during cycling even at elevated temperature.

In a preferred embodiment, the spinel phase comprises a disordered spinel with an Fd-3m lattice symmetry or an ordered spinel with a P4₃32 lattice symmetry or mixtures thereof.

A high-quality lithium transition metal titanate with a spinel structure according to the invention is obtained by a solution-based route followed by a low-temperature argon or air post-sintering in a multistage manufacturing process. In a first step, a mixture comprising organometallic and/or inorganic Li-, Ti- and at least one M-compound with M a transition metal as precursors and solvents is prepared. The thus obtained mixture is then dried for the solvents to be evaporated. Eventually, a subsequent thermal treatment of the dried mixture under inert atmosphere or under air at a temperature from 300 °C to 1000 °C, more preferred from 400°C to 800 °C, especially preferred from 450 °C to 650 °C, is carried out, whereby nanoparticles of the lithium transition metal titanate with a spinel structure are obtained. The cathode materials are prepared at the charged state or delithiated state or intermediate state with higher oxidation states, so that the materials resist the contact with air during preparation or can be directly synthesized under air atmosphere with variable content of oxygen and even under pure oxygen. Thus the nanocrystalline cathode materials can resist the moisture and air or oxygen during preparation. The solution-based synthesis route and the low-temperature air-sintering at 500°C or the argon-sintering at 600°C allow to produce nanocrystalline cathode materials with reduced effort.

In a preferred embodiment, during the first process step, where the mixture is prepared, polymer additives are added into the precursor solutions, so that after the drying step and the subsequent thermal treatment, carbon coated nanoparticles of the lithium transition metal titanate are obtained. A conductive carbon coating of the nanoparticle is reached. During the subsequent post-sintering, the crystallization of active particles proceeds with the concomitant thermal decomposition of organics. Thus, the crystal growth can be inhibited and accordingly nanosized particles are obtained.

Said nanocrystalline lithium transition metal titanate with a spinel structure is appropriate as a cathode material preferred as intercalation material in lithium-ion cells. Furthermore the present invention relates to a lithium-ion cell with a cathode material, according to claim 9. The present invention relates eventually to a lithium-ion battery, with at least one cell according to claim 10.

### Figures

The present invention will be more apparent from the following description of nonlimiting specific embodiments with reference to the drawings.
**Fig.1a** displays the X-ray diffraction pattern of the synthesized spinel LiFeTiO_{4/}C using Mo-K_{α1} radiation. Rietveld refinement was performed to identify the phase structure. Vertical bars above indicate the allowed Bragg reflection of disordered spinel with space group Fd-3m (No. 227), vertical bars below indicate the allowed Bragg reflection of ordered spinel with space group P4332 (No. 212).
**Fig.1b** exhibits the galvanostatic charge/discharge profiles of LiFeTiO_{4/}C measured between 1.5-4.8 V vs. Li+/Li at 7.7 mAg⁻¹. (a): first cycle tested at room temperature, (b): first cycle tested at 40 °C, (c): 100th cycle tested at room temperature, (d): 150^{th} cycle tested at 40 °C.
**Fig.1c** shows the cyclability data and C-rate performance (1C = 307 mAg⁻¹) of LiFeTiO_{4/}C measured at 40 °C.
**Fig.2a** presents the X-ray diffraction pattern of the synthesized spinel LiMnTiO₄.
**Fig.2b** displays the galvanostatic charge/discharge profiles (from first to sixth cycles) of LiMnTiO4 measured at room temperature between 1.5-4.8 V vs. Li+/Li at 7.7 mAg⁻¹.
**Fig.2c** exhibits the cyclability data of LiMnTiO₄ measured at 40 °C at 16 mAg⁻¹ and at room temperature at 7.7 mAg⁻¹. Open symbols: charge, filled symbols: discharge.
**Fig.3a** shows the X-ray diffraction patterns of the synthesized spinel Li₁₊ₓMn₁₊ₓTi₁₋ₓO₄ with x = 0.2, 0.4, 0.6 and 0.8.
**Fig.3b** displays the galvanostatic charge/discharge profiles (from second to tenth cycles) of Li_{1.4}Mn_{1.4}Ti_{0.6}O₄ measured at 40°C between 1.5-4.8 V vs. Li+/Li at 16 mAg⁻¹.
**Fig.3c** shows the cyclability data (first ten cycles) of Li_{1.4}Mn_{1.4}Ti_{0.6}O₄ measured at 40 °C at 16 mAg⁻¹. Open symbols: charge, filled symbols: discharge.
**Fig.3d** exhibits the galvanostatic charge/discharge profiles (from second to sixth cycles) of Li_{1.8}Mn_{1.8}Ti_{0.2}O₄ measured at 40 °C between 1.5-4.8 V vs. Li+/Li at 1 mAg⁻¹.
**Fig.3e** presents the cyclability data (first seven cycles) of Li_{1.8}Mn_{1.8}Ti_{0.2}O₄ measured at 40 °C at 16 mAg⁻¹. Open symbols: charge, filled symbols: discharge.

### Examples

### Example 1

To prepare a LiFeTiO₄/carbon composite, 1 g polyvinylpyrrolidone (average molecular weight, 1 300 000) was dissolved into a mixture of 30 mL isopropanol and propionic acid (1:1 volume ratio) under stirring. Afterwards, 2.781 g Fe(NO₃)₂·9H₂O, 267 mg Li₂CO₃ and 2.04 mL Ti[OCH(CH₃)₂]₄ were added in sequence under vigorous stirring. The mixture was stirred overnight and then transferred into a Petri dish allowing for evaporating the solvents at room temperature. The inorganic-organic xerogels were then dried under vacuum at 90 °C for 7 h and sintered subsequently at 600 °C (ramping rate 5 °C min⁻¹) for 4 h under flowing argon.

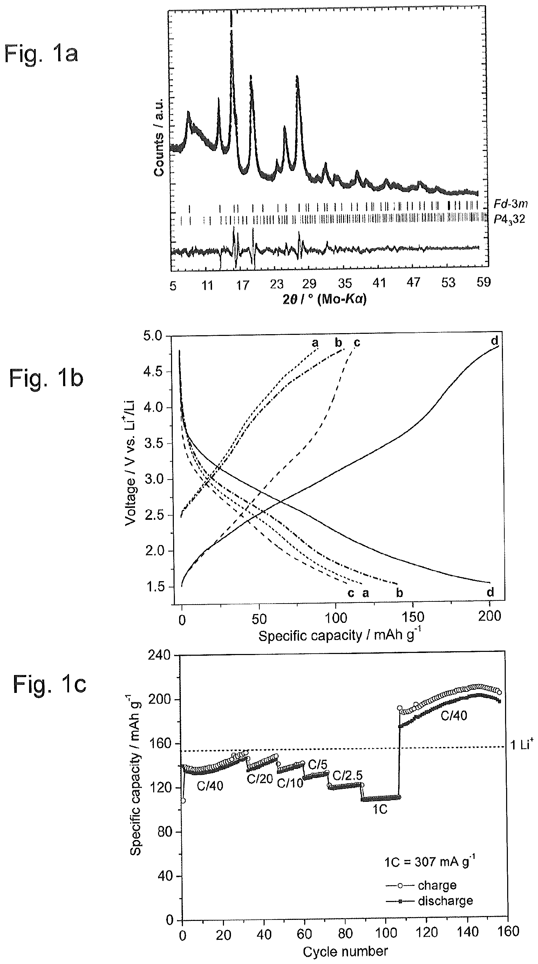

The crystalline phase of the material was examined by X-ray diffraction. Fig. 1a shows the diffraction pattern of the as-obtained material with a two-phase mixture of disordered spinel (space group Fd-3m No. 227) and ordered spinel (space group P4332, No. 212). The refined particle size for the Fd-3m phase and P4332 phase is 8 nm and 6 nm, respectively.

Electrochemical performance was performed in a lithium metal half-cell configuration using a Swagelok cell. The working electrode was prepared by grinding the as-obtained powders and carbon black at a weight ratio of 4:1. The electrolyte was 1 M LiPF₆ in 1:1 (v/v) ethylene carbonate/dimethyl carbonate. Pure Li metal foil was used as counter electrode. Two sheets of Whatman glass microfibers were used as separator. The cells were assembled in an argon-filled glove box. Electrochemical test was performed in the voltage range 1.5-4.8 V vs. Li⁺/Li at different current rates at 40 °C and at room temperature. The specific capacities were calculated based on the mass of active material by excluding the native carbon content. The charge/discharge curves at C/40 rate (1C = 307 mA g⁻¹) were shown in Fig. 1b. The cycloability and C-rate performance of LiFeTiO_{4/}C measured at 40 °C were shown in Fig. 1c. A specific capacity of 200 mAhg⁻¹ (i.e., 1.3 Li⁺ reversible insertion/extraction) has been observed at 40 °C and C/40 rate after 150 cycles. It also shows good rate capability of 110 mAhg⁻¹ at 1C rate at 40 °C.

### Example 2

To prepare LiMnTiO₄, 256 mg LiOH was dissolved into 10 mL H₂O under vigorous stirring with subsequent addition of 0.6 g citric acid monohydrate and 0.25 g Pluronic®F-127 (Solution A). 4 mL ethylene glycol was added into 10 mL H₂O with subsequent addition of 2.116 g Mn(CH₃COO)₂·4H₂O (Solution B). 2.556 mL Ti[OCH(CH₃)₂]₄ were added into Solution A under vigorous stirring with subsequent dropwise addition of Solution B. The mixtures were heated at a hot plate at 80 °C to evaporate the solvents. The xerogels were then dried under vacuum at 120 °C for 6 h and thermally treated in air with a two-step sintering procedure, first at 250 °C for 4 h (ramping rate 0.5 °Cmin⁻¹) and then at 500 °C for 2 h (ramping rate 2 °Cmin⁻¹).

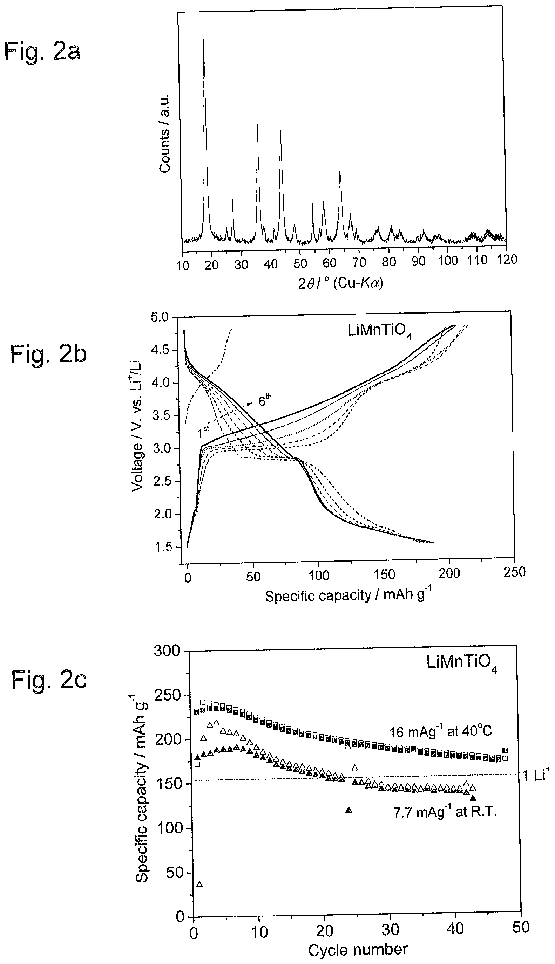

Fig. 2a shows the X-ray diffraction pattern of LiMnTiO₄. It has mixed phases of disordered spinel (space group Fd-3m No. 227) and ordered spinel (space group P4332, No. 212). The refined particle size for the Fd-3m phase and P4332 phase is 12 nm and 17 nm, respectively. Two diffraction peaks between 20-30° (2θ) can be clearly seen, which belong to an ordered spinel phase (space group P4332).

The electrochemical measurement is similar as described in Example 1. But the working electrode was prepared by grinding the as-obtained powders and carbon black at a weight ratio of 2:1. Electrochemical charge/discharge was performed in the voltage range 1.5-4.8 V vs. Li⁺/Li at 16 mAg⁻¹ at 40 °C and at 7.7 mAg⁻¹ at room temperature. Fig. 2b,c show the electrochemical performance. LiMnTiO₄ show an averaged discharge voltage of about 3.15 V, which is 0.6 V higher than that of LiFeTiO_{4/}C as shown in Fig.1b. Furthermore, LiMnTiO₄ shows initial discharge capacity of about 230 mAhg⁻¹ at 40 °C at 16 mAg⁻¹ current rate. This indicates a discharge energy density of about 720 Whkg⁻¹. This is much higher than that of LiCoO₂ (500 Whkg⁻¹), LiMn₂O₄ (400 Whkg⁻¹), LiFePO₄ (500 Whkg⁻¹) and LiCo_{1/3}Ni_{1/3}Mn_{1/3}O₂ (600 Whkg⁻¹). [V. Pralong, V. Gopal, V. Caignaert, V. Duffort, B. Raveau, Chem. Mater., 24 (2012) 12.] LiMnTiO₄ also shows good capacity retention up to 50 cycles (Fig. 2c).

### Example 3

To prepare Li_{1.4}Mn_{1.4}Ti_{0.6}O₄, a procedure similar to Example 2 was used to obtain the xerogels. In this case, 336.5 mg LiOH, 2.87 g Mn(CH₃COO)₂·4H₂O and 1.486 mL Ti[OCH(CH₃)₂]₄ were used to obtain a Li- and Mn-rich spinel structure. The xerogels were dried under vacuum at 150 °C for 3 h and thermally treated in air with a two-step sintering procedure, first at 200 °C for 4 h (ramping rate 0.5 °Cmin⁻¹) and then at 500 °C for 2 h (ramping rate 10 °Cmin⁻¹).

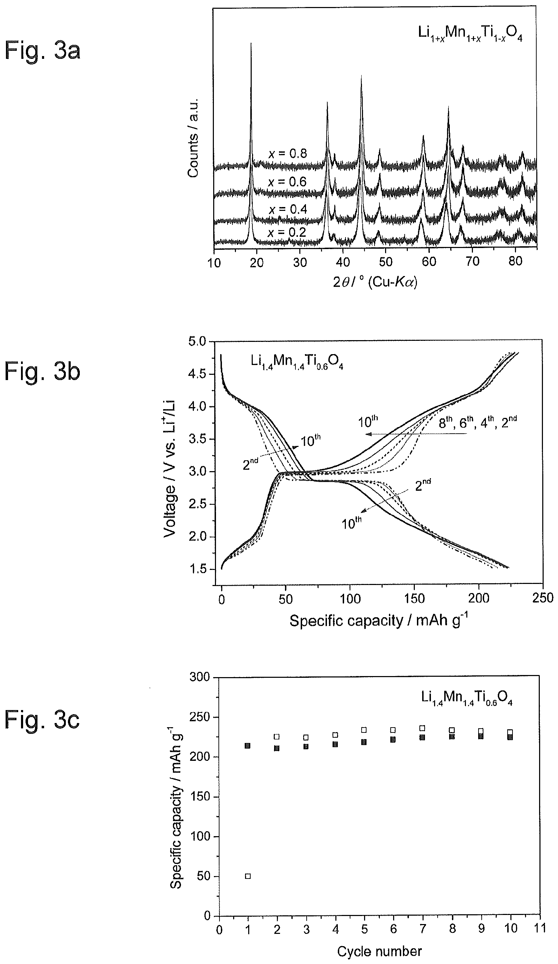

Fig. 3a shows the X-ray diffraction pattern of Li_{1.4}Mn_{1.4}Ti_{0.6}O₄ with disordered spinel phase (space group Fd-3m No. 227). The diffraction peaks between 20-30° (2θ) belonging to an ordered spinel phase (space group P4332, No. 212) are hardly to be seen. The refined particle size for the Fd-3m phase is 26 nm.

The electrochemical measurement is similar as described in Example 2. Electrochemical charge/discharge was performed in the voltage range 1.5-4.8 V vs. Li⁺/Li at 16 mAg⁻¹ at 40 °C. Fig. 3b,c show the charge/discharge curves and cycloability data. Li_{1.4}Mn_{1.4}Ti_{0.6}O₄ shows stable cycling performance during the first ten cycles with a discharge specific capacity of about 220 mAhg⁻¹ measured at 40 °C at 16 mAg⁻¹ current rate.

### Example 4

To prepare Li_{1.8}Mn_{1.8}Ti_{0.2}O₄, a procedure similar to Example 2 was used to obtain the xerogels. In this case, 419.5 mg LiOH, 3.578 g Mn(CH₃COO)₂·4H₂O and 0.48 mL Ti[OCH(CH₃)₂]₄ were used to obtain a Li- and Mn-rich spinel structure. The xerogels were dried and post-sintering using the same was as described in Example 3. Fig. 3a shows the X-ray diffraction pattern for Li_{1.8}Mn_{1.8}Ti_{0.2}O₄. The refined particle size for the Fd-3m phase is 24 nm. Furthermore, additional materials Li₁₊ₓMn₁₊ₓTi₁₋ₓO₄ with x = 0.2 and 0.6 were prepared using similar procedure. All Li₁₊ₓMn₁₊ₓTi₁₋ₓO₄ materials show similar X-ray diffraction patterns (Fig. 3a).

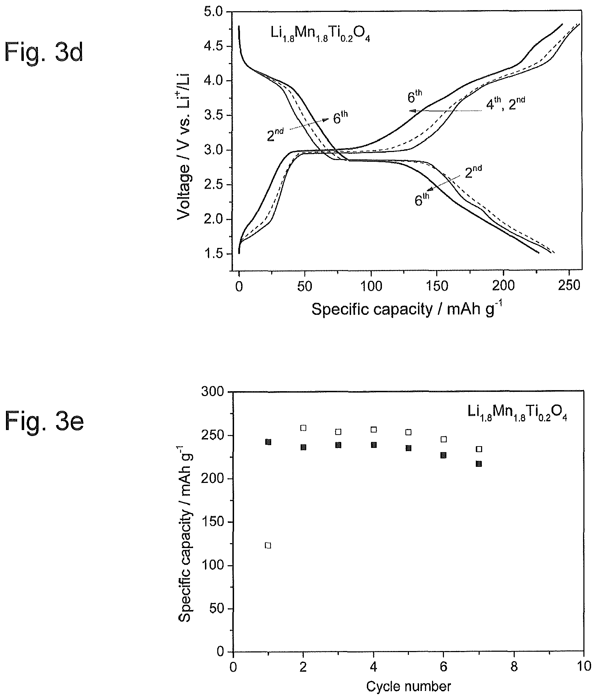

The electrochemical measurement is similar as described in Example 3. Fig. 3d,e show the charge/discharge curves and cycloability data for Li_{1.8}Mn_{1.8}Ti_{0.2}O₄ measured at 40 °C at 16 mAg⁻¹ current rate. It shows similar charge/discharge profiles as LiMnTiO₄ and Li_{1.4}Mn_{1.4}Ti_{0.6}O₄. Slightly higher discharge capacity of about 250 mAhg⁻¹ was observed during the first few cycles. There is no obvious capacity fading during the first few cycles.

## Claims

1. Cathode material comprising a lithium transition metal titanate with a spinel structure and a formula:
Li₁₊ₓM₁₊ₓTi₁₋ₓO₄
wherein 0 ≤ x ≤ 0,8 and
M is at least one transition metal taken among the elements {Cr, Mn, Fe, Co, Ni, Cu, Zn, Mo, Nb and V}, in the form of nanoparticles with a particle size from 1 nm to 500 nm.

2. Cathode material comprising a lithium transition metal titanate of claim 1 wherein the particle size is from 2 nm to 200 nm.

3. Cathode material comprising a lithium transition metal titanate of claim 1 or 2 wherein the particle size is from 3 nm to 30 nm.

4. Cathode material comprising a lithium transition metal titanate of one of the claims 1 to 3, wherein 0 < x ≤ 0,8.

5. Cathode material comprising a lithium transition metal titanate of one of the claims 1 to 4, wherein M is at least one transition metal taken among the elements {Mn, Fe, Co and Ni}.

6. Cathode material comprising a lithium transition metal titanate of one of the claims 1 to 5, wherein the spinel structure comprises a disordered spinel with a Fd-3m lattice symmetry or an ordered spinel with a P4₃32 lattice symmetry or a mixture thereof.

7. Method for the manufacturing of a cathode material of the claims 1 to 6 comprising the process steps of
a) Preparing a mixture comprising an organometallic and/or an inorganic Li-, Ti- and at least one M-compound with M a transition metal as a precursor and a solvent; and
b) Drying the prepared mixture for the solvents to be evaporated;
c) Subsequent thermal treatment of the dried mixture at a temperature from 300 °C to 1000 °C, wher eby nanoparticles of the lithium transition metal titanate are obtained.

8. Method for the manufacturing of a lithium transition metal titanate of claim 7 wherein during the process step a), polymers are added into the mixture, whereby after the process step c) carbon coated nanoparticles of the lithium metal titanate are obtained.

9. Lithium-ion cell with a cathode material, according to one of the claims 1 to 6.

10. Lithium-ion battery with at least one lithium-ion cell of claim 9.

## Patentansprüche

1. Kathodenmaterial umfassend ein Lithium-Übergangsmetall-Titanat mit einer Spinellstruktur und einer Formel
Li₁₊ₓM₁₊ₓTi₁₋ₓO₄
wobei 0 ≤ x ≤ 0,8 und
M mindestens ein Übergangsmetall aus den Elementen {Cr, Mn, Fe, Co, Ni, Cu, Zn, Mo, Nb und V} ist, in Form von Nanopartikeln mit einer Partikelgröße zwischen 1 nm und 500 nm.

2. Kathodenmaterial umfassend ein Lithium-Übergangsmetall-Titanat nach Anspruch 1 wobei die Partikelgröße zwischen 2 nm und 200 nm beträgt.

3. Kathodenmaterial umfassend ein Lithium-Übergangsmetall-Titanat nach Anspruch 1 oder 2, wobei die Partikelgröße zwischen 3 nm und 30 nm beträgt.

4. Kathodenmaterial umfassend ein Lithium-Übergangsmetall-Titanat nach einem der Ansprüche 1 bis 3, wobei 0 < x ≤ 0,8.

5. Kathodenmaterial umfassend ein Lithium-Übergangsmetall-Titanat nach einem der Ansprüche 1 bis 4, wobei M mindestens ein Übergangsmetall aus den Elementen {Mn, Fe, Co und Ni} ist.

6. Kathodenmaterial umfassend ein Lithium-Übergangsmetall-Titanat nach einem der Ansprüche 1 bis 5, wobei die Spinellstruktur einen ungeordneten Spinell mit einer Fd-3m Gittersymmetrie oder einen geordneten Spinell mit einer P4₃32 Gittersymmetrie oder ein Gemisch davon umfasst.

7. Verfahren zur Herstellung eines Kathodenmaterials nach einem der Ansprüche 1 bis 6 umfassend die Verfahrensschritte
a) Bereitstellen eines Gemischs umfassend eine organometallische und/oder eine anorganische Li-, Ti- und mindestens eine M-Verbindung, wobei M ein Übergangsmetall ist, als Ausgangsstoff und als Lösungsmittel; und
b) Trocknen des bereitgestellten Gemischs, wobei die Lösungsmittel verdampfen.
c) Anschließende thermische Behandlung des getrockneten Gemischs bei einer Temperatur zwischen 300 °C und 1000 °C, wobei Nanopartikel des Lithium-Übergangsmetall-Titanats entstehen.

8. Verfahren zur Herstellung des Lithium-Übergangsmetall-Titanats nach Anspruch 7, wobei während Verfahrensschritt a) Polymere zu dem Gemisch hinzugefügt werden und nach Verfahrensschritt c) Kohlenstoffbeschichtete Nanopartikel des Lithium-Übergangsmetall-Titanats entstehen.

9. Lithium-Ionen Zelle umfassend ein Kathodenmaterial nach einem der Ansprüche 1 bis 6.

10. Lithium-Ionen Batterie umfassend mindestens eine Lithium-Ionen Zelle nach Anspruch 9.

## Revendications

1. Matériau de cathode renfermant un titanate de lithium et de métal de transition avec une structure spinelle et une formule
Li₁₊ₓM₁₊ₓTi₁₋ₓO₄
avec 0 ≤ x ≤ 0,8 et
M est au moins un métal de transition choisi parmi les éléments {Cr, Mn, Fe, Co, Ni, Cu, Zn, Mo, Nb und V}, sous forme de nanoparticules avec une granulométrie comprise entre 1 nm et 500 nm.

2. Matériau de cathode renfermant un titanate de lithium et de métal de transition conforme à la revendication 1 selon lequel la granulométrie est comprise entre 2 et 200 nm.

3. Matériau de cathode renfermant un titanate de lithium et de métal de transition conforme à la revendication 1 ou 2 selon lequel la granulométrie est comprise entre 3 et 30 nm.

4. Matériau de cathode renfermant un titanate de lithium et de métal de transition conforme à l'une des revendications 1 à 3, selon lequel 0 < x ≤ 0,8.

5. Matériau de cathode renfermant un titanate de lithium et de métal de transtion conforme à l'une des revendications 1 à 4, selon lequel M est au moins un métal de transition choisi parmi les éléments {Mn, Fe, Co et Ni}.

6. Matériau de cathode renfermant un titanate de lithium et de métal de transition conforme à l'une des revendications 1 à 5, selon lequel la structure spinelle renferme un spinelle désordonné avec une symétrie de réseau Fd-3m ou un spinelle' ordonné avec une symétrie de réseau P4₃32 ou un mélange de ceux-ci.

7. Procédé d'obtention d'un matériau de cathode conforme à l'une des revendications 1 à 6 renfermant les étapes
a) préparation d'un mélange renfermant un composé organométallique ou inorganique de Li, de Ti et d'au moins un M avec M un métal de transition, en tant que précurseur et solvant; et
b) séchage du mélange préparé pour que les solvants soient évaporés;
c) traitement thermique subséquent du mélange séché à une température de 300 °C et 1000 °C, selon lequel des nanoparticules de titanate de lithium et de métal de transition sont obtenues.

8. Procédé d'obtention d'un matériau de cathode conforme à la revendication 7 selon lequel durant l'étape a) des polymères sont ajoutés au mélange et après l'étape c) des nanoparticules de titanate de lithium et de métal de transition revêtues de carbone sont obtenues.

9. Cellule de batterie lithium-ion renfermant un matériau de cathode conforme à l'une des revendications 1 à 6.

10. Batterie lithium-ion renfermant au moins une cellule lithium-ion conforme à la revendication 9.
